# FASCICULE DE BREVET EUROPEEN

(11) **EP 3 744 157 B1**
(45) Date de publication et mention de la délivrance du brevet: **02.03.2022**
(21) Numéro de dépôt: 19707421.4
(22) Date de dépôt: 18.01.2019
(51) Int. Cl.: B60Q 11/00, H05B 45/50, H05B 47/20

(54) **PROCÉDÉ DE DIAGNOSTIC DE SOURCES LUMINEUSES DÉTACHABLES POUR UN VÉHICULE**
VERFAHREN ZUR DIAGNOSE VON LÖSBAREN LICHTQUELLEN FÜR EIN FAHRZEUG
DIAGNOSTIC METHOD OF REMOVABLE LIGHT SOURCES FOR VEHICULE

(30) Priorité: 25.01.2018 FR 1850571
(43) Date de publication de la demande: 02.12.2020
(73) Titulaire: PSA Automobiles SA, 78300 Poissy (FR)
(72) Inventeur: DHAINAUT, Jean Marc, 75007 PARIS (FR); DROUILLET, Franck, 91190 GIF SUR YVETTE (FR); FOHRER, Franck, 78400 CHATOU (FR)
(86) Numéro de dépôt international: PCT/FR2019/050099
(87) Numéro de publication internationale: WO 2019/145622

(56) Documents cités:
- FR-A1- 3 033 747
- US-A1- 2008 224 708
- US-A1- 2009 167 190

## Description

La présente invention concerne de manière générale le diagnostic de sources lumineuses pour un véhicule. En particulier, l'invention concerne un procédé permettant de réalise un tel diagnostic ainsi qu'un dispositif mettant en œuvre ce procédé.

Ainsi, les véhicules de tout type sont munis de sources lumineuses destinées à des fonctions d'éclairage tels que les feux avant, à des fonctions de signalisation du véhicule, tels que les feux arrière ou à fournir des indications aux usagers d'autres véhicules tels que les feux de recul, feux-stops et feux clignotants.

Une défectuosité d'une source lumineuse est préjudiciable à la sécurité de l'utilisateur du véhicule concerné ainsi que de ceux d'autres véhicules et il est connu dans l'art antérieur des dispositifs de diagnostic permettant de les détecter, tels que décrits par le document FR3033747.

En contrepartie, ce système présente notamment l'inconvénient d'être limité à des sources lumineuses détachables de type LED. En outre, il ne prend pas en compte les spécificités des différentes sources lumineuses d'un véhicule.

Le document US2008224708 A1 divulgue un procédé de diagnostic de sources lumineuses.

Un but de la présente invention est de répondre aux inconvénients du document de l'art antérieur mentionnés ci-dessus et en particulier, de proposer un procédé de diagnostic fiable et adapté à chaque type de source lumineuse du véhicule.

Pour cela un premier aspect de l'invention concerne un procédé de diagnostic de sources lumineuses pour un véhicule, tel que défini dans la revendication 1.

Grâce à la différentiation des sources lumineuses, un tel procédé permet de réaliser le diagnostic de chaque type de source lumineuse de façon optimale. Ainsi, dans le cas d'une source lumineuse à allumage continu, l'utilisateur peut être informé dès l'allumage ou commutation de cette source, évitant de parcourir de longues distances avec un feu défectueux. En revanche, dans le cas d'une source lumineuse à affichage discontinu, le diagnostic n'est réalisé qu'à l'extinction de la source lumineuse ce qui permet un allumage sans retard de la source lumineuse permettant de transmettre une information le plus rapidement possible. De plus, la polarisation effectuée immédiatement avant ou immédiatement après la phase de commutation, c'est-à-dire la période de temps durant laquelle la source lumineuse est allumée permet de masquer un allumage intempestif ou un flash éventuel de la source lumineuse durant sa polarisation, qui est alors confondu avec la commutation de la source lumineuse

Avantageusement, l'étape de polarisation de la source lumineuse de type à allumage continu est également effectuée après la phase de commutation de ladite source lumineuse. Ceci permet d'accroitre le niveau d'information de l'utilisateur dans le cas où une défaillance survient durant une phase d'allumage de la source lumineuse, et permet donc de ne pas surprendre un utilisateur au moment de repartir avec son véhicule. Par exemple, la polarisation de la source lumineuse à allumage continu peut être effectuée immédiatement avant sa commutation, c'est-à-dire son allumage, maintenue durant sa commutation et être interrompue après son extinction.

Avantageusement, la polarisation de la source lumineuse de type à allumage continu est contiguë avec la phase de commutation de la source lumineuse de type à allumage continu Ceci permet d'éviter tout effet d'allumage intempestif de la source lumineuse lors de sa polarisation.

De manière spécialement avantageuse, le procédé de diagnostic est réalisé à chaque commutation de chaque source lumineuse, de façon à informer l'utilisateur du véhicule d'une défaillance le plus rapidement possible.

Par exemple, les sources lumineuses sont agencées pour être montées détachables sur le véhicule, par exemple sur une remorque. Le procédé de diagnostic permet alors d'informer un utilisateur de toute défaillance d'une source lumineuse invisible pour lui, mais dégradant sa sécurité.

Avantageusement, le procédé comprend une étape préalable de détection de la nature de la source lumineuse de type à allumage continu et de la source lumineuse de type à allumage discontinu, c'est-à-dire si chacune de ces sources lumineuses comprend une ampoule à filament, une ampoule à diode électroluminescente ou LED ou encore une ampoule halogène.

Un aspect du procédé non couvert par l'invention comprend une étape d'adaptation d'un courant de commutation de la source lumineuse de type à allumage continu et la source lumineuse de type à allumage discontinu selon la nature de chacune de ces sources lumineuses, ce qui permet d'optimiser le pilotage de chaque source lumineuse ainsi que sa consommation énergétique.

Avantageusement, la valeur seuil est adaptée au type et/ou à la nature de chaque source lumineuse polarisée, afin d'optimiser la fiabilité dudit procédé de diagnostic.

Un aspect non couvert par l'invention prévoit que deux valeurs seuils sont utilisées, une valeur seuil minimale et une valeur seuil maximale, afin d'optimiser encore la fiabilité dudit procédé de diagnostic.

Un second aspect de l'invention est un dispositif de diagnostic de sources lumineuses montées sur un véhicule, tel que défini dans la revendication 8.

Un dernier aspect de l'invention concerne un véhicule comportant un dispositif de diagnostic selon le deuxième aspect de l'invention tel que défini dans la revendication 9.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un schéma d'un dispositif de diagnostic et de pilotage d'une source lumineuse selon la présente invention
- la figure 2 représente un mode de réalisation du schéma de la figure 1,
- la figure 3 représente un diagramme temporel d'un procédé de diagnostic selon la présente invention
- la figure 4 représente un diagramme temporel d'un autre procédé de diagnostic selon la présente invention

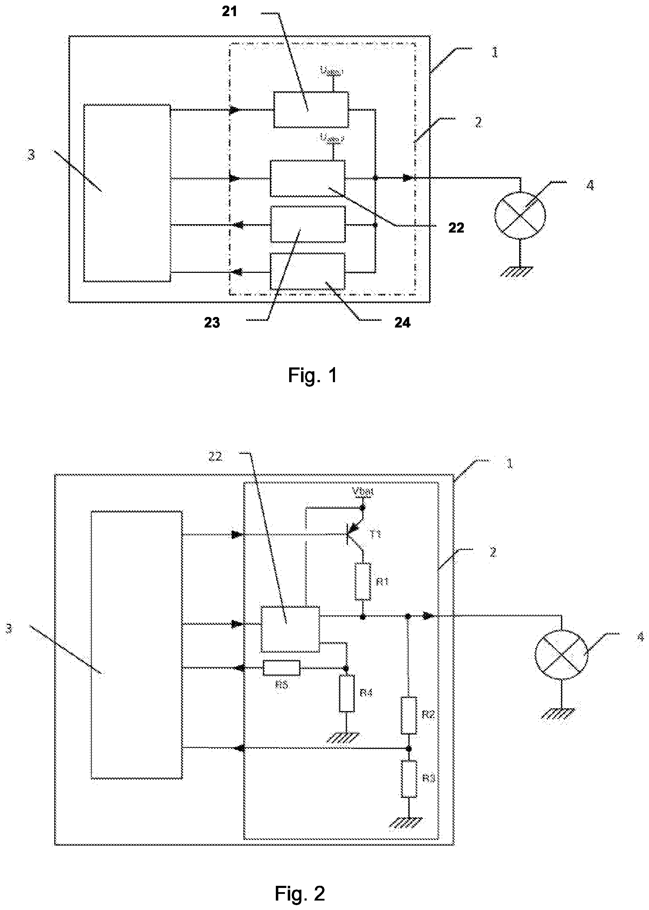

La figure 1 représente un dispositif de diagnostic et de pilotage 1 de sources lumineuses 4 d'un véhicule ou bien de sources lumineuses montées détachables sur le véhicule par exemple sur une remorque, une caravane ou un porte-vélos. Le véhicule est typiquement un véhicule particulier, mais peut être également un véhicule utilitaire, collectif, agricole ou militaire. Le dispositif 1 est ainsi intégré au véhicule, à une remorque de véhicule ou encore à un boitier d'alimentation électrique pour remorque de véhicule. Il comprend une unité de commande 3 agencée pour être raccordée à au moins une source lumineuse 4 par l'intermédiaire d'un élément d'interface 2 qui est donc situé entre l'unité de commande 3 et la source lumineuse 4.

Grâce à cet élément d'interface 2, le dispositif 1 permet une détection du type de source lumineuse 4 et une adaptation du pilotage des sources lumineuses, tel que décrit dans le document de l'art antérieur. Il est à noter qu'il y a de préférence autant d'éléments d'interface 2 que de sources lumineuses 4.

Comme visible sur la figure 1, l'élément d'interface 2 comprend un module de polarisation 21 de la source lumineuse 4, un module de commutation 22 de la source lumineuse 4, un module de diagnostic de commutation 23 et un module de relecture 24 de la tension de sortie de la source lumineuse 4.

Le module de polarisation 21 permet de polariser la source lumineuse 4, c'est-à-dire de fournir une alimentation de tension proche ou identique à la tension appliquée par le module de commutation, mais de courant significativement réduit, par exemple par l'utilisation d'un transistor T1 et d'une résistance R1, tels que représentés sur la figure 2. Ce courant réduit peut être adapté à tout mode de réalisation particulier et être de 1 à 100 mA, par exemple 10 ou 20 mA. Ainsi, la résistance R1 peut avoir une valeur de 500 ohms.

Le module de commutation 22 assure le pilotage de la source lumineuse 4, c'est à dire fournit une alimentation électrique de façon à allumer la source lumineuse 4 en réponse à une commande de l'utilisateur du véhicule ou bien à une commande d'un système de sécurité du véhicule (non représenté). Cette alimentation électrique peut être directement fournie par la batterie du véhicule, soit une tension d'environ 12V ou bien être fournie par un circuit d'alimentation secondaire permettant une alimentation plus constante de tension légèrement inférieure, par exemple de tension 11V.

Le module de commutation 22 peut être de type « smartpower », c'est-à-dire comprendre un ou plusieurs transistors de puissance intégrant un circuit de mesure de courant, tel que connu de l'homme du métier et représenté sur la figure 2.

Le module de diagnostic de commutation 23 permet de mesurer le courant délivré par le module de commutation 21 et permettant à l'unité de commande 3 d'acquérir une information sur le courant commuté, c'est-à-dire le courant de l'alimentation électrique délivré par le module de commutation 22 quand la source lumineuse 4 est commutée ou allumée. Sur le mode de réalisation de la figure 2, il comprend deux résistances R4 et R5, dans laquelle la résistance R4 est montée entre un nœud relié à une sortie du transistor de puissance et la masse et la résistance R5 est montée entre ledit nœud et l'entrée de l'unité de commande 3.

Le module de relecture 24 permet de détecter ou de mesurer une valeur de la tension de sortie, par exemple par un pont diviseur alimentant l'unité de commande 3 et permettant de s'assurer que la tension d'entrée de l'unité de commande 3 ne dépasse pas 5V lorsque la tension de sortie du module de polarisation est maximale. Il comprend sur la figure 2 deux résistances R2 et R3 montées en pont diviseur, dans lequel la résistance R2 est branchée entre l'alimentation de la source lumineuse 4 et un nœud relié à une entrée de l'unité de commande 3 et la résistance R3 est branchée entre la masse et le nœud relié à l'entrée de l'unité de commande 3.

L'unité de commande 3 comprend par exemple un microcontrôleur ou un microprocesseur supportant un logiciel ou encore un circuit intégré pour application spécifique (ASIC), des moyens d'alimentation et des moyens d'interface avec l'architecture électronique du véhicule ainsi qu'un convertisseur analogique numérique (non représentés).

On entend par tension de sortie de la source lumineuse 4, la tension aux bornes de la source lumineuse 4 lorsqu'elle est alimentée par le moyen de polarisation 23 décrit ci-avant.

Comme décrit dans le document de l'art antérieur, l'unité de commande 3 peut acquérir un signal d'une ou deux valeurs de tension et les comparer à une ou deux valeurs seuils prédéterminées et dépendantes du type de source lumineuse et du matériel installé dans le dispositif 1. Ceci permet de déterminer le type de source lumineuse 4 et d'adapter le mode d'alimentation de chaque source lumineuse 4, par exemple en adoptant une alimentation électrique en mode modulation de largeur de phase ou PWM pour une source lumineuse comprenant une ampoule à filament et une alimentation électrique en courant continu dans le cas d'une ampoule à LED.

En outre, l'unité de commande 3 est configurée pour différentier les sources lumineuses en deux types ou catégories : les sources lumineuses à allumage continu et les sources lumineuses à allumage discontinu. Ceci permet d'appliquer un procédé de diagnostic différent pour chaque type de source lumineuse comme décrit ci-après.

Les sources lumineuses à allumage continu sont des sources lumineuses restant allumées en continu durant tout un trajet ou au moins durant une partie significative d'un trajet effectué avec le véhicule, par exemple de quelques minutes à quelques heures. Il s'agit par exemple des sources lumineuses des feux avant ou des feux de signalisation arrière.

Les sources lumineuses à allumage discontinu sont des sources lumineuses restant allumées uniquement durant des phases spécifiques de la circulation du véhicule, par exemple lors d'un changement de direction ou d'une conduite en marche arrière et durant quelques secondes à quelques minutes. Elles correspondent donc à des indicateurs de direction ou clignotants ainsi qu'à des feux-stops.

De manière générale, le diagnostic d'une source lumineuse 4 est effectué par sa polarisation par le module de polarisation 21, et par la lecture de la tension aux bornes de la source lumineuse pendant sa polarisation par l'unité de commande 3 via le module de relecture 24. Du fait du courant limité circulant durant la polarisation de la source lumineuse, la tension de sortie de la source lumineuse est fortement diminuée par la consommation électrique de la source lumineuse et se situe entre deux valeurs de tension prédéfinies dans un mode de fonctionnement normal, ce qui permet de détecter une défaillance de la source lumineuse.

À l'inverse, une tension de sortie située entre une tension nulle et la première valeur de tension prédéfinie et caractéristique d'un court-circuit à la masse et une tension de sortie située entre la deuxième valeur de tension prédéfinie et la tension d'alimentation est caractéristique d'une charge ouverte, c'est-à-dire de l'absence ou d'une défaillance de la source lumineuse diagnostiquée. Un tel procédé de diagnostic permet donc de détecter les pannes fréquentes des sources lumineuses d'un véhicule, afin d'informer l'utilisateur du véhicule d'un dysfonctionnement affectant sa sécurité.

Les valeurs de tension prédéfinies sont stockées dans l'unité de commande 3 et peuvent être sélectionnées ou adaptées selon la nature de chaque source lumineuse, par exemple selon que la source lumineuse comprend des ampoules à incandescence, des ampoules halogènes ou des ampoules à diodes électroluminescentes (LED). Ainsi, les valeurs de tension prédéfinies peuvent être sélectionnées en usine ou bien être sélectionnées par l'unité de commande 3 selon le résultat d'un procédé de détection du type de source lumineuse selon l'état de la technique.

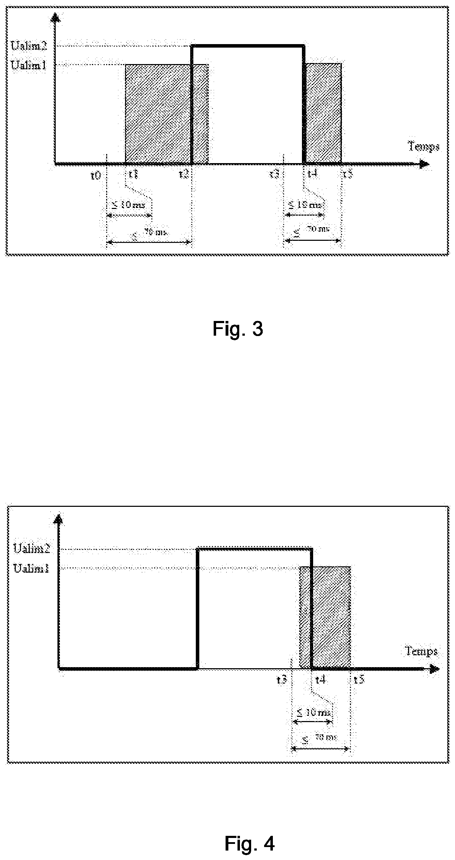

La figure 3 décrit un procédé de diagnostic selon la présente invention tel qu'utilisé pour une source lumineuse à allumage continu. Ainsi, à l'arrivée d'une commande d'allumage (temps t0), le module de polarisation 21 polarise au temps t1 la source lumineuse par application d'une tension Ualim1 et d'un courant réduit, comme expliqué ci-avant. À partir du temps t2, le module de commutation 21 commute la source lumineuse, c'est-à-dire procède à un allumage normal de la source lumineuse 4, jusqu'au temps t3 où arrive une décommande, c'est-à-dire une commande d'extinction de la source lumineuse 4. Au temps t4, la source lumineuse est effectivement éteinte, c'est-à-dire que le module de commutation 21 interrompt l'alimentation électrique nominale de la source lumineuse. Au temps t4, c'est-à-dire à l'extinction de la source lumineuse, le module de polarisation polarise à nouveau la source lumineuse jusqu'au temps t5.

Une source lumineuse à allumage continu est donc diagnostiquée par le présent procédé immédiatement avant son allumage ainsi qu'immédiatement après son extinction. Un tel procédé permet d'éviter à un utilisateur de rouler avec un feu défectueux sans s'en rendre compte, puisqu'il peut être averti dès l'allumage du feu défectueux. Enfin, dans le cas où une source lumineuse devient défectueuse au cours d'un trajet, le présent procédé de diagnostic permet d'en informer l'utilisateur dès l'extinction du feu, ce qui permet de gagner en sécurité.

La polarisation de la source lumineuse, même si elle est effectuée durant une durée limitée (typiquement de 40 à 80 ms), peut parfois résulter en un allumage visible de la source lumineuse polarisée, qui pourrait être interprété comme un dysfonctionnement par un utilisateur du véhicule. Le présent procédé évite cependant un tel défaut par la réalisation de la polarisation de la source lumineuse immédiatement avant ou immédiatement après la commutation de la source lumineuse, et un allumage possible de la source lumineuse durant sa polarisation est donc masqué ou confondu avec l'allumage de la source lumineuse durant sa commutation et ainsi quasiment imperceptible pour l'utilisateur.

Enfin, la polarisation de la source lumineuse immédiatement avant sa commutation conduit à retarder brièvement la commutation, c'est-à-dire l'allumage de la source lumineuse. Un tel retard bref est cependant sans conséquence dans le cas d'une source lumineuse à allumage continu et peu ou pas détectable pour l'utilisateur du véhicule.

Par les termes « immédiatement avant », il est entendu que la phase de polarisation est réalisée à la suite d'une commande d'allumage de la source lumineuse et de façon très proche ou contiguë avec la phase de commutation, c'est-à-dire accolée d'un point de vue temporel. Ainsi, la polarisation peut être stoppée au moment du début de la commutation ou bien peu de temps avant ou après le début de la commutation, par exemple moins de 10 ms ou préférentiellement moins de 5 ms. De même, les termes « immédiatement après » signifient que la source lumineuse est polarisée soit à l'extinction de la commutation, ou bien peu de temps après la fin de la commutation par exemple moins de 10 ms et préférentiellement moins de 5 ms. Il est donc préférable que la polarisation soit contiguë ou superposée à la commutation de la source lumineuse, de façon à éviter l'éclairage éventuel de la source lumineuse durant la polarisation, comme expliqué ci-avant.

Les durées fournies sur la figure 3 sont indicatives et permettent d'illustrer les échelles de temps du présent procédé de diagnostic. Ainsi, la durée (t0-t1) entre la commande d'allumage et la polarisation de la source lumineuse est typiquement inférieure à 10 ms et la durée (t0-t2) entre la commande d'allumage et la commutation de la source lumineuse est typiquement de 70 ms ou moins, soit une durée de polarisation d'environ 60 ms, immédiatement avant la commutation de la source lumineuse 4.

De même, la durée (t3-t4) entre la décommande et l'extinction de la source lumineuse est typiquement inférieure à 10 ms et la durée (t3-t5) entre la décommande et la fin de la polarisation de la source lumineuse est de70 ms ou moins.

La Figure 4 décrit un procédé de diagnostic selon la présente invention tel qu'utilisé pour une source lumineuse à affichage discontinu. Dans un tel procédé, l'étape de polarisation de la source lumineuse est réalisée immédiatement après l'extinction de la source lumineuse uniquement et il diffère donc du procédé appliqué aux sources lumineuses à allumage continu décrit ci-avant en ce qu'aucune polarisation de la source lumineuse n'est réalisée avant sa commutation.

De cette façon, la commutation d'une source lumineuse à affichage discontinu n'est pas retardée, ce qui permet de transmettre une information rapidement aux autres usagers d'une voie de circulation par un allumage le plus rapide possible de la source lumineuse. Cependant, le bon fonctionnement d'une telle source lumineuse est diagnostiqué lors de son extinction, ce qui permet de masquer un allumage éventuel dû à la polarisation de la source lumineuse tout en informant l'utilisateur du véhicule d'un éventuel dysfonctionnement.

Par exemple, l'utilisateur du véhicule peut être informé de la détection d'un dysfonctionnement d'une source lumineuse par un affichage visuel, tel qu'un voyant allumé sur un tableau de bord ou un message affiché entre les cadrans du tableau de bord ou sur le système d'info-divertissement. Alternativement ou en addition, une alarme sonore peut être activée, comme un son continu ou discontinu ou une alarme vocale. Dans le cas d'indicateurs de direction, la fréquence de clignotement peut par exemple être doublée.

Par ailleurs, certaines sources lumineuses d'un véhicule peuvent appartenir à l'une ou l'autre des catégories précédemment décrites. Ainsi, les sources lumineuses dédiées aux feux de recul peuvent être classées dans le type à affichage continu, puisqu'elles sont allumées plus longtemps que des sources lumineuses de feux-stops ou d'indicateurs de direction. Cependant, il peut être approprié d'allumer ces sources lumineuses sans retard pour garantir la sécurité de l'utilisateur du véhicule ainsi que des personnes autour du véhicule, auquel cas il s'agit de sources lumineuses à allumage discontinu.

De même, les feux antibrouillards sont souvent allumés sur de longues périodes, par exemple de quelques minutes à plusieurs heures, ce qui les rattache au type à allumage continu. Cependant, pour certains véhicules, ces sources lumineuses sont également utilisées pour éclairer la route lors d'un changement de direction, ce qui les rapprochent du type à allumage discontinu. Dans ce cas, un procédé de diagnostic différent pourra être appliqué selon leur type d'utilisation, c'est-à-dire qu'une polarisation immédiatement avant la commutation pourra être réalisée uniquement lorsqu'ils sont employés comme feux d'éclairage antibrouillards.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence au dispositif 1 de diagnostic qui n'est pas limité aux schémas des figures 1 et 2, mais qui peut prendre toute forme appropriée. En outre, les exemples de durées, tensions et courant fournis dans la présente description ne sont pas limitatifs et pourront être adaptés selon le type de véhicule, de source lumineuse et d'application.

## Revendications

1. Procédé de diagnostic de sources lumineuses (4) pour un véhicule, les sources lumineuses (4) comprenant au moins une source lumineuse de type à allumage continu, restant allumée en continu durant tout un trajet ou au moins durant une partie significative du trajet effectué avec le véhicule, et au moins une source lumineuse de type à allumage discontinu, restant allumée uniquement durant des phases spécifiques de la circulation du véhicule, le procédé de diagnostic comprenant les étapes consistant à :
• polariser la au moins une source lumineuse de type à allumage continu et la au moins une source lumineuse de type à allumage discontinu,
• acquérir une tension de sortie de chaque source lumineuse polarisée,
• comparer la tension de sortie acquise à une valeur seuil de façon à vérifier un état de fonctionnement de chaque source lumineuse, **caractérisé en ce que** :
• la polarisation de la au moins une source lumineuse de type à allumage continu est effectuée immédiatement avant une phase d'alimentation de ladite au moins une source lumineuse de type à allumage continu,
• la polarisation de la au moins une source lumineuse de type à allumage discontinu est effectuée immédiatement après une phase d'alimentation de ladite au moins une source lumineuse de type à allumage discontinu.

2. Procédé de diagnostic selon la revendication précédente, **caractérisé en ce que** l'étape de polarisation de la au moins une source lumineuse de type à allumage continu est également effectuée après la phase d'alimentation de ladite au moins une source lumineuse de type à allumage continu.

3. Procédé de diagnostic selon l'une quelconque des revendications précédentes, **caractérisé en ce que** la polarisation de la au moins une source lumineuse de type à allumage continu est contiguë avec la phase d'alimentation de la au moins une source lumineuse de type à allumage continu.

4. Procédé de diagnostic selon l'une quelconque des revendications précédentes, **caractérisé en ce qu'**il est réalisé à chaque phase d'alimentation de chaque source lumineuse.

5. Procédé de diagnostic selon l'une quelconque des revendications précédentes, **caractérisé en ce que** les sources lumineuses (4) sont agencées pour être montées détachables sur le véhicule.

6. Procédé de diagnostic selon la revendication précédente, **caractérisé en ce que** le procédé comprend une étape préalable de détection de la nature de la au moins une source lumineuse de type à allumage continu et de la au moins une lumineuse de type à allumage discontinu.

7. Procédé de diagnostic selon l'une quelconque des revendications précédentes, **caractérisé en ce que** la valeur seuil est adapté au type et/ou à la nature de chaque source lumineuse polarisée.

8. Dispositif de diagnostic (1) de sources lumineuses (4) montées sur un véhicule, comprenant :
• une unité de commande (3) configurée pour mettre en œuvre le procédé de diagnostic selon l'une quelconque des revendications précédentes,
• un module de polarisation (21) adapté pour être commandé par ladite unité de commande (3) et pour polariser la au moins une source lumineuse de type à allumage continu et la au moins une source lumineuse de type à allumage discontinu,
• un module de relecture (24) permettant à l'unité de commande de mesurer la tension de sortie de la au moins une source lumineuse de type à allumage continu et la au moins une source lumineuse de type à allumage discontinu.

9. Véhicule comportant au moins un dispositif de diagnostic (1) selon la revendication précédente.

## Patentansprüche

1. Verfahren zur Diagnose von Lichtquellen (4) für ein Fahrzeug, wobei die Lichtquellen (4) mindestens eine Lichtquelle vom kontinuierlich zündenden Typ, die während einer gesamten Fahrt oder zumindest während eines signifikanten Teils der mit dem Fahrzeug zurückgelegten Fahrt kontinuierlich eingeschaltet bleibt, und mindestens eine Lichtquelle vom diskontinuierlich zündenden Typ, die nur während spezifischer Phasen der Fahrt des Fahrzeugs eingeschaltet bleibt, umfassen, wobei das Diagnoseverfahren die folgenden Schritte umfasst: :
- Polarisieren der mindestens einen Lichtquelle vom Typ mit kontinuierlicher Zündung und der mindestens einen Lichtquelle vom Typ mit diskontinuierlicher Zündung,
- Erfassen einer Ausgangsspannung jeder polarisierten Lichtquelle,
- Vergleichen der erfassten Ausgangsspannung mit einem Schwellenwert, um einen Betriebszustand jeder Lichtquelle zu überprüfen,
**dadurch gekennzeichnet, dass** :
- die Polarisation der mindestens einen Lichtquelle vom Typ mit kontinuierlicher Zündung unmittelbar vor einer Phase der Versorgung der mindestens einen Lichtquelle vom Typ mit kontinuierlicher Zündung durchgeführt wird,
- die Polarisation der mindestens einen Lichtquelle vom Typ mit diskontinuierlicher Zündung unmittelbar nach einer Stromversorgungsphase der mindestens einen Lichtquelle vom Typ mit diskontinuierlicher Zündung durchgeführt wird.

2. Diagnoseverfahren nach dem vorhergehenden Anspruch, **dadurch gekennzeichnet, dass** der Schritt des Polarisierens der mindestens einen Lichtquelle vom Typ mit kontinuierlicher Zündung ebenfalls nach einer Phase des Einschaltens der mindestens einen Lichtquelle vom Typ mit kontinuierlicher Zündung durchgeführt wird.

3. Diagnoseverfahren nach einem der vorhergehenden Ansprüche, **dadurch gekennzeichnet, dass** die Polarisation der mindestens einen Lichtquelle vom Typ mit kontinuierlicher Zündung an die Stromversorgungsphase der mindestens einen Lichtquelle vom Typ mit kontinuierlicher Zündung angrenzt.

4. Diagnoseverfahren nach einem der vorhergehenden Ansprüche, **dadurch gekennzeichnet, dass** es bei jeder Versorgungsphase jeder Lichtquelle durchgeführt wird.

5. Diagnoseverfahren nach einem der vorhergehenden Ansprüche, **dadurch gekennzeichnet, dass** die Lichtquellen (4) so angeordnet sind, dass sie abnehmbar am Fahrzeug angebracht werden können.

6. Diagnoseverfahren nach dem vorhergehenden Anspruch, **dadurch gekennzeichnet, dass** das Verfahren einen vorherigen Schritt umfasst, bei dem die Art der mindestens einen Lichtquelle vom Typ mit kontinuierlicher Zündung und der mindestens einen Lichtquelle vom Typ mit diskontinuierlicher Zündung erfasst wird.

7. Diagnoseverfahren nach einem der vorhergehenden Ansprüche, **dadurch gekennzeichnet, dass** der Schwellenwert an den Typ und/oder die Art jeder polarisierten Lichtquelle angepasst ist.

8. Vorrichtung (1) zur Diagnose von Lichtquellen (4), die an einem Fahrzeug angebracht sind, mit :
- einer Steuereinheit (3), die so konfiguriert ist, dass sie das Diagnoseverfahren nach einem der vorhergehenden Ansprüche durchführt,
- ein Polarisationsmodul (21), das dazu ausgelegt ist, von der Steuereinheit (3) gesteuert zu werden und die mindestens eine Lichtquelle vom Typ mit kontinuierlicher Zündung und die mindestens eine Lichtquelle vom Typ mit diskontinuierlicher Zündung zu polarisieren,
- ein Rücklesemodul (24), das es der Steuereinheit ermöglicht, die Ausgangsspannung der mindestens einen Lichtquelle vom Typ mit kontinuierlicher Zündung und der mindestens einen Lichtquelle vom Typ mit diskontinuierlicher Zündung zu messen.

9. Fahrzeug mit mindestens einer Diagnosevorrichtung (1) nach dem vorhergehenden Anspruch.

## Claims

1. A method of diagnosing light sources (4) for a vehicle, the light sources (4) comprising at least one light source of the continuous-ignition type, remaining on continuously throughout a journey or at least during a significant part of the journey made with the vehicle, and at least one light source of the discontinuous-ignition type, remaining on only during specific phases of the movement of the vehicle, the method of diagnosis comprising the steps of :
- polarising the at least one continuously-ignited light source and the at least one discontinuously-ignited light source,
- acquiring an output voltage from each polarised light source,
- comparing the acquired output voltage with a threshold value so as to verify an operating state of each light source,
**characterised in that**
- the polarisation of the at least one continuously ignited type light source is performed immediately before a power supply phase of said at least one continuously ignited type light source,
- the polarisation of the at least one discontinuously ignited type light source is carried out immediately after a feeding phase of the at least one discontinuously ignited type light source.

2. The diagnostic method according to the preceding claim, **characterized in that** the step of polarizing the at least one continuous ignition type light source is also performed after the phase of feeding said at least one continuous ignition type light source.

3. The diagnostic method according to any one of the preceding claims, **characterized in that** the polarization of the at least one continuously ignited type light source is contiguous with the feeding phase of the at least one continuously ignited type light source.

4. The diagnostic method according to any of the preceding claims, **characterised in that** it is performed at each supply phase of each light source.

5. Diagnostic method according to any of the preceding claims, **characterised in that** the light sources (4) are arranged to be detachably mounted on the vehicle.

6. A diagnostic method according to the preceding claim, **characterised in that** the method comprises a prior step of detecting the nature of the at least one light source of the continuous ignition type and the at least one light source of the discontinuous ignition type.

7. The diagnostic method according to any of the preceding claims, **characterised in that** the threshold value is adapted to the type and/or nature of each polarised light source.

8. A diagnostic device (1) for light sources (4) mounted on a vehicle, comprising:
- a control unit (3) configured to implement the diagnostic method according to any of the preceding claims,
- a polarisation module (21) adapted to be controlled by said control unit (3) and to polarise the at least one continuously lit type light source and the at least one discontinuously lit type light source
- a readback module (24) enabling the control unit to measure the output voltage of the at least one continuous start type light source and the at least one discontinuous start type light source.

9. Vehicle comprising at least one diagnostic device (1) according to the preceding claim.
